# EUROPEAN PATENT SPECIFICATION

(11) **EP 1 514 184 B1**
(45) Date of publication and mention of the grant of the patent: **18.06.2008**
(21) Application number: 02743289.7
(22) Date of filing: 14.06.2002
(51) Int. Cl.: G06F 11/14, G06F 11/20, H04Q 3/545

(54) **WARMING LARGE DYNAMIC DATA IN REDUNDANT FUNCTIONAL UNIT**
AUFWÄRMEN GROSSER DYNAMISCHER DATEN IN EINER REDUNDANTEN FUNKTIONALEN EINHEIT
ACTIVATION DE DONNEES DYNAMIQUES DE GRANDE TAILLE DANS UNE UNITE FONCTIONNELLE REDONDANTE

(43) Date of publication of application: 16.03.2005
(73) Proprietor: Nokia Corporation, 02150 Espoo (FI)
(72) Inventor: TIITTANEN, Tero, FIN-02760 Espoo (FI); RUA, Philippe, FIN-00360 Helsinki (FI); TÄHJÄ, Päivi, FIN-02320 Espoo (FI)
(74) Representative: Simmelvuo, Markku Kalevi
(86) International application number: PCT/FI2002/000519
(87) International publication number: WO 2003/107187

(56) References cited:
- EP-A2- 0 943 997
- US-A- 4 371 754
- US-A- 5 367 674
- US-A- 5 469 503
- US-A- 5 963 634

## Description

### FIELD OF THE INVENTION

The present invention relates to information technology. Especially the present invention describes a method for warming a large dynamic data in a redundant functional unit.

### BACKGROUND OF THE INVENTION

There are a lot of modern information technology systems that are required to serve continuously, e.g. different kinds of computer and telecommunication networks. These so called critical systems also require tuning and updating, and it should be possible to do without interruptions, or at least with as short service interruption as possible. The traditional solution is to have a working unit and a spare unit. The working unit serves normally, and in case of breakdown or updating of the working unit, the spare unit continues providing services. The spare unit is able to replace the working unit because it comprises the same information as the working unit. Furthermore, requests coming to the working unit are also directed to the spare unit in order to maintain the consistency of the two units.

Let us assume that, for some reason, the spare unit is e.g. replaced with a new spare unit. Naturally, the new spare unit does not contain the same information as the working unit because it has been booted up. After the boot-up, in order to achieve the 2N redundant feature, the new spare unit needs to be loaded e.g. with necessary configuration data from the working unit. This procedure of restoring information to a new unit is called warming.

Static data does not need to be warmed at all. It can be generated by the programs independently (during unit start-up phase). The amount of dynamic data is the key question. If there is only a little amount of dynamic data, no long interruptions are needed because the working unit can be locked during the warming procedure. Otherwise, long locking periods are needed. However, in case of dynamic data, the data may not be copied in small pieces because the dynamic data can change with time.

The traditional way to do the warming procedure is to lock both the working unit and the spare unit, and copy all the data to the spare unit in one pass. By locking both units, the spare unit will become identical with the working unit. This means that incoming configuration requests have to be queued or acknowledged with a negative status. Negative status refers to a situation where configuration requests cannot be processed.

A typical warming procedure is described in US 5963634.

In both cases, new configurations cannot be created during a long period of time because the transferring capacity between the working unit and the spare unit is limited.

The locking of the working unit causes an interruption in the service. Blocked requests can be rejected, queued or redirected to other unit(s). The duration of the interruption depends on the amount of the data needed to be copied. The problem of the copying in one pass is the time needed for the warming procedure. In case of large dynamic data, the service interruption is considered to be too long. One solution is to have greater bandwidth between the working unit and spare unit to make the data transfer faster

Another solution for shortening the locking time can be partitioning the warming data into small blocks, and lock only one block at a time. If the configuration action depends on large amount of dynamic data, this approach is not an appropriate solution to be used. Furthermore, if the configuration action causes changes in the various parts of the dynamic data, the partitioning of the warming procedure gets more complicated and warming in small blocks will be very hard to implement.

Yet another solution to implement warming is the following. A copy of the dynamic data can be gathered by an external party which, in the first place, requests configuration actions. Then it's up to this party and the spare unit to get the spare unit up-to-date by using the gathered data. The working unit is not needed to take part in this procedure. This approach has its problems though: a copy of all dynamic data is needed to be stored in some central place. Also some kind of locking is needed for the copying of the data.

### PURPOSE OF THE INVENTION

The present invention alleviates the above-identified problems in warming the large amount of the dynamic data. Particularly the present invention shortens the lockup situations in the warming procedure and makes service interruption periods shorter.

### SUMMARY OF THE INVENTION

The present invention, which is defined by the claims, describes a method for warming dynamic data in a redundant functional unit. The functional unit comprising at least a working unit and a spare unit, wherein configuration data is delivered to both the working unit and the spare unit. The working unit comprises one or more warmable objects, and the dynamic data of one or more warmable objects of the working unit is copied to one or more warmed objects of the spare unit. The spare unit is locked during the warming procedure.

In the present invention, one or more snapshots of the dynamic data of one or more warmable objects of the working unit are taken into a first buffer memory of the working unit. The differences between consecutive snapshots are determined after each snapshot and transferred to a second buffer memory of the spare unit after each snapshot. When the final snapshot has been taken and the differences between the final snapshot and the previous snapshot have been transferred to the second buffer memory of the spare unit, the contents of the second memory buffer are written in one or more warmed objects of the spare unit. The spare unit lock can now be unlocked.

The present invention describes a warming procedure for warming redundant functional units. The solution described in the present invention keeps the functional unit during most of the warming in a state where it is able to serve new configuration requests. The working unit side may still be locked but for a shorter amount of time than earlier. The present invention makes it easy to warm various kinds of data areas in multiple clients without a need to organise or classify the data for warming purposes. Data is treated as bulk bytes.

Furthermore, the present invention describes a warming manager which controls the warming procedure. It orders a 'start warming' message from a recovery subsystem of the network element.

The warming procedure is based on the fact that the warming manager takes one or more snapshots of the dynamic data of the warmable objects and transfers only differences in the dynamic data between two consecutive snapshots to the warming manager of the spare unit side. Furthermore, a threshold value representing the minimum amount of differences between two consecutive snapshots is determined. When the threshold value is triggered, a final (last) snapshot of the dynamic data will be taken.

Locking of the working unit and/or spare units are/is an important factor in the present invention. The spare unit is kept locked during the warming procedure.

In one embodiment, the working unit is not locked when taking a snapshot. The requests that arrive at the working unit while the snapshot of the dynamic data is taken are buffered and handled only after the snapshot has been taken.

In another embodiment, also the working unit may or may not be locked during the period when a snapshot is taken. For example, the working unit does not necessarily need to be locked during the first rounds of the warming. The disadvantage of this is that the last transfer cannot be entered on these rounds because the contents of the data have probably changed during the comparison. Locking of the working unit may be needed during the whole final (last) transfer of differences in order to reach an identical state between the working and spare unit. Locking may also be needed during some rounds before the final transfer because it is not known if the round is the last round until it has already started. There are two alternatives to that: either the locking of the working unit is started on some fixed transfer round (but not on the first round) or after a first 'under the threshold' round has been occurred.

In one embodiment, the working unit does not need to be kept locked during the last transfer and spare unit writing when doing the following: when the sending warming manager decides that it is time for the final (last) transfer, the spare unit lock is kept on but configuration requests arriving at the working unit are buffered. The lock is released and configuration requests are started to be handled after dynamic data is written to the programs. However, during the final (last) round, also spare unit SP configuration requests need to be buffered. They do not need to be buffered during the previous rounds and if rejecting is used on the working unit, they never need to be buffered.

The present invention dramatically shortens the moments when the working unit is unable to serve new configuration requests. In addition to that, the moments are distributed over a long period of time meaning that the working unit should be able to clear the message queue which might have accumulated during reading the dynamic data with the warming manager.

Furthermore, the present invention describes a solution that makes warming easy to use from the client's point of view. The clients do not need to divide the dynamic data in blocks or classify it in any other way. They just provide a function to copy all dynamic data to the temporary storage area of the warming manager.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig 1 illustrates an embodiment of the system in accordance with the present invention, and
Figs 2 - 11 illustrate an embodiment of the present invention where a warming procedure is explained in accordance with the present invention.

### DETAILED DESCRIPTION OF THE INVENTION

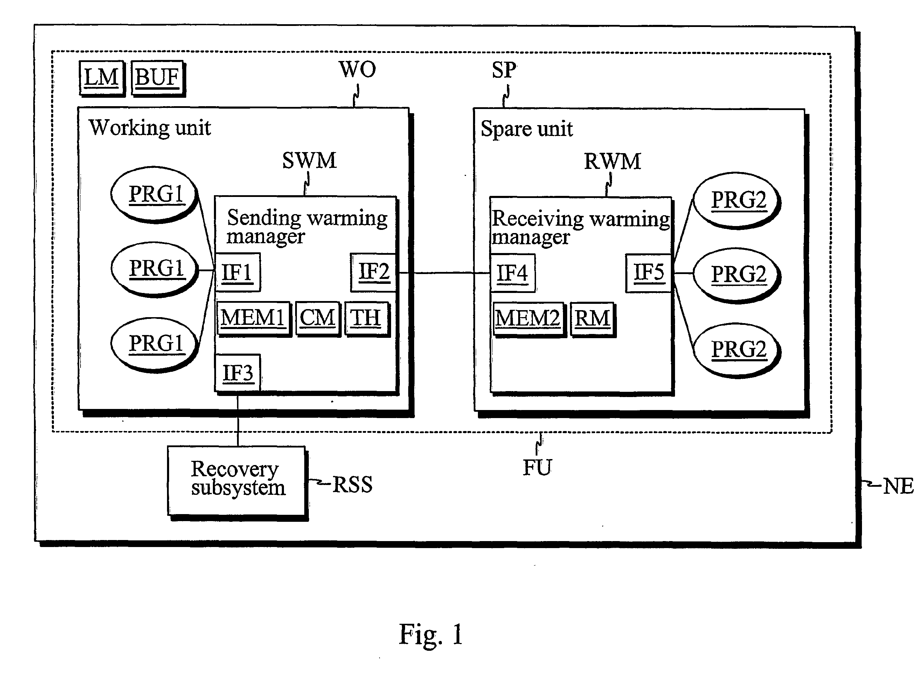

Figure 1 represents a preferred embodiment of the system in accordance with the present invention. The system in Figure 1 comprises a network element NE comprising a redundant functional unit FU. The functional unit FU consists of two identical plug-in-units, a working unit WO and a spare unit SP.

In a redundant functional unit, configuration data is delivered to both the working unit WO and the spare unit SP. Therefore, it is an important task to make the spare unit SP an identical copy of the working unit WO in a warming procedure. The warming procedure should not interfere the normal operation of the working unit much. In general, warming can be defined as updating the status data of process families in the spare unit using similar data of the working unit. The overall warming is the result of a group of warm-up events. After warming, the processes e.g. in two computers are in the same state and perform similarly at the same input. Then the spare unit is ready to perform tasks of the working unit. To achieve an effective way to implement the warming procedure, a warming manager is introduced. Both the working unit WO and the spare unit comprise a warming manager (SWM and RWM). The working unit WO comprises also one or more warmable objects PRG1 which contain dynamic data to be warmed, that is, to be copied to the spare unit SP as warmed objects PRG2.

The sending warming manager SWM comprises a first interface IF1 towards the working unit WO for acquiring dynamic data of one or more warmable objects PRG1 of the working unit WO. Further, the sending warming manager SWM comprises means SM for taking one or more snapshots of the dynamic data of the warmable objects PRG1 of the working unit WO using said first interface IF1, first memory means MEM1 for storing said snapshot data, calculating means CM for determining the differences in the data of two consecutive snapshots, and a second interface IF2 for sending the differences in the data of two consecutive snapshots to the receiving warming manager RWM of the spare unit SP. Furthermore, the sending warming manager SWM comprises a third interface IF3 to a recovery subsystem RSS of the network element NE for receiving a warming procedure request.

The implementation of the interface towards the clients the dynamic data of which is to be warmed is e.g. as follows: A shared memory type of mechanism is used to introduce a buffer memory common to the client and the warming manager. On the warming manager's request, the client writes all its dynamic data to the buffer memory. If dynamic data is stored in one structure, this can be done with a single memory copy function call.

In a preferred embodiment, the sending warming manager SWM comprises also a threshold value TH representing the minimum amount of differences between two consecutive snapshots, after which a final snapshot of the dynamic data of the warmable objects PRG1 of the working unit WO is taken. In other words, if the amount of differences in the dynamic data between two consecutive snapshots is lower than the threshold value, the next snapshot will be the final snapshot. The threshold value for the final transfer is decided e.g. based on the information how long locking situation can be on, and how fast data can be transferred. In the rare circumstances in which the differences are not converging to zero, the warming manager has to make the decision to end the warming anyway after a few iteration rounds.

The receiving warming manager RWM comprises a fourth interface IF4 to a sending warming manager SWM of the working unit WO for receiving differences in the data of two consecutive snapshots, second memory means MEM2 for storing the difference data, a fifth interface IF5 to the warmed objects PRG2 of the spare unit SP and writing means RM for storing the difference data in the second memory means MEM2 in the warmed objects PRG2 of the spare unit SP.

In a preferred embodiment, the warming manager is implemented as a separate program which has an efficient shared memory type of interface to the clients, and an asynchronous interface to recovery and to the sending warming manager SWM.

The functional unit FU comprises locking means LM for locking and unlocking the spare unit during the warming procedure. In one embodiment, also the working unit WO is locked when a snapshot is taken. In this case, new configuration requests may be buffered in a buffer BUF. Another possibility, in absence of the buffer BUF, is to reject the incoming requests.

The warming managers and the above mentioned means are in a preferred embodiment implemented with hardware and/or software components.

The network element NE of Figure 1 is e. g. a Radio Network Controller (RNC) of the UTRAN (UMTS Radio Access Network) or the Mobile Services Switching Centre (MSC). However, the use of the present invention is not limited to mobile communication networks but it can also be used in other communication networks.

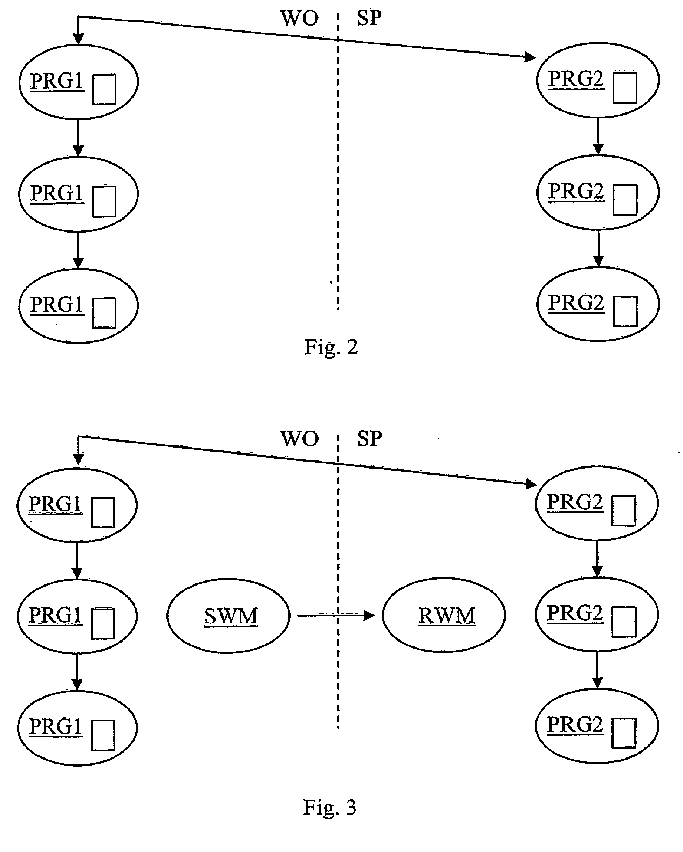

Figures 2 - 11 illustrate the warming functionality of the present invention. In Figure 2, a simplified system is represented. Only the relevant parts, that is, the working unit WO, the spare unit SP, warmable objects PRG1 and warmed objects PRG2 are represented.

A warming procedure for a spare unit SP usually has several characteristic features:
- the amount of data to be warmed from the working unit WO to the spare unit SP is big,
- transferring of the data from the working unit WO to the spare unit SP is usually the bottleneck, and
- the working unit WO side cannot necessarily be locked for the whole transfer time. The length of the transfer time is e.g. more than 15 seconds. The system cannot be in a state in which it is not able to accept configuration requests for such a long time.

The solution represented in the present invention treats all warmable dynamic data as bulk bytes, and therefore does not assume any special structures inside the data. The warming concept can deal with any number of warmable objects (PRGs). Figures 2 - 13 represent only three warmable objects with which the warming concept is illustrated. In a preferred embodiment, all the warmable objects FRG1 are warmed at the same time because only then can the consistency of the dynamic data between all the objects be guaranteed.

Figure 2 represents the initial state of the warming procedure. The actual warming procedure is implemented by using a special component that is here called as a warming manager. Figure 3 comprises two warming managers, the sending warming manager SWM and the receiving warming manager RWM.

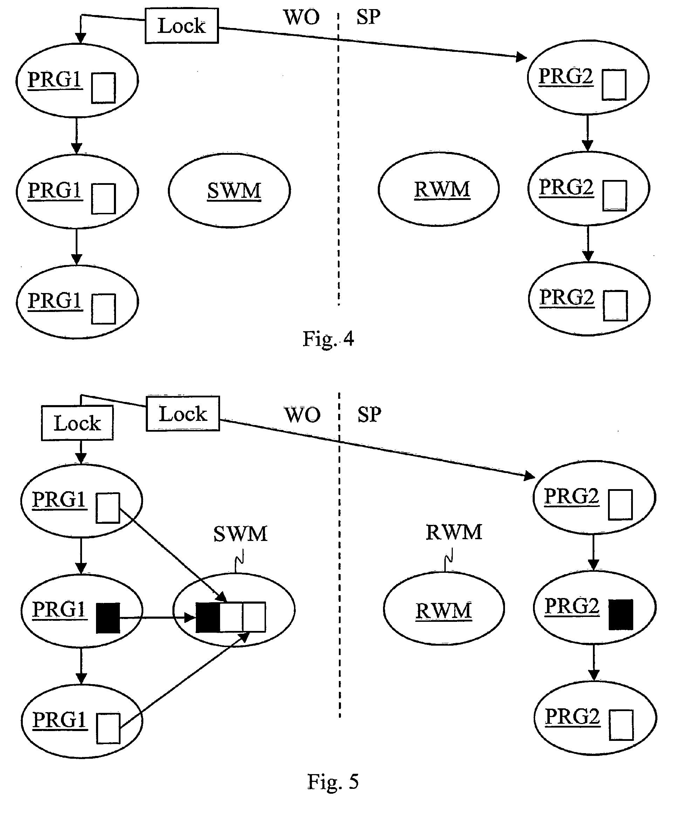

Configuration update messages towards the spare unit SP side are discarded during the whole warming procedure. In other words, the spare unit SP is locked, as illustrated in Figure 4. Contents of the dynamic data are read from the working unit WO side to the internal memory of the sending warming manager SWM. In Figure 5, the working unit WO side is locked during taking snapshots of the dynamic data. In practise the top of the program stack where the external requests arrive at is locked. However, the locking of the working unit WO side is not necessarily needed. In another embodiment of Figure 5, the working unit WO is not locked but there exists a buffer that stores configuration requests arriving while the snapshots are taken. When the snapshots have been taken, the working unit WO accepts the buffered configuration requests.

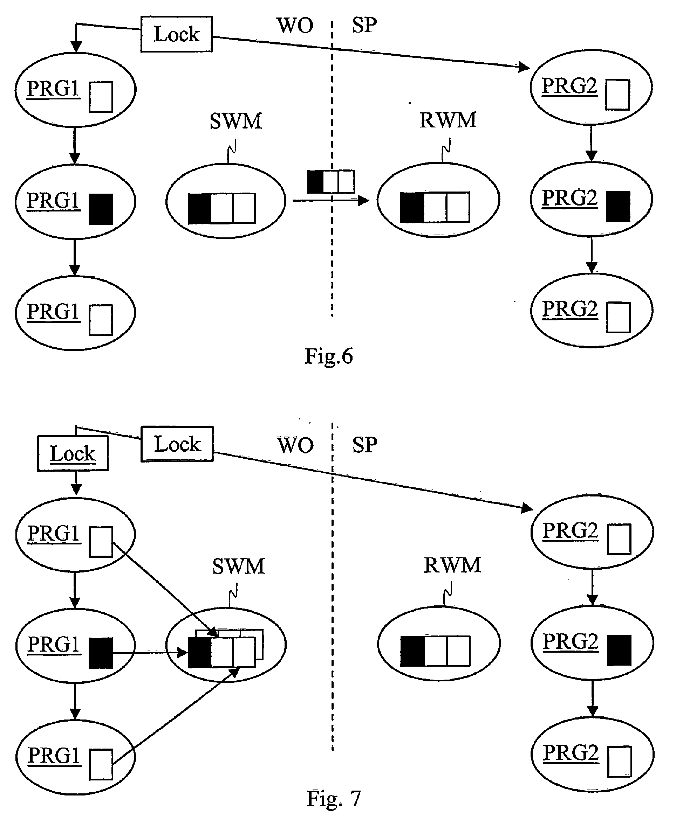

The snapshot taken is then transferred to the spare unit SP side. During this, the working unit WO can serve arriving configuration requests. This causes WO dynamic data to slowly diverge from the snapshot transferred to SP side. This is illustrated in Figure 6.

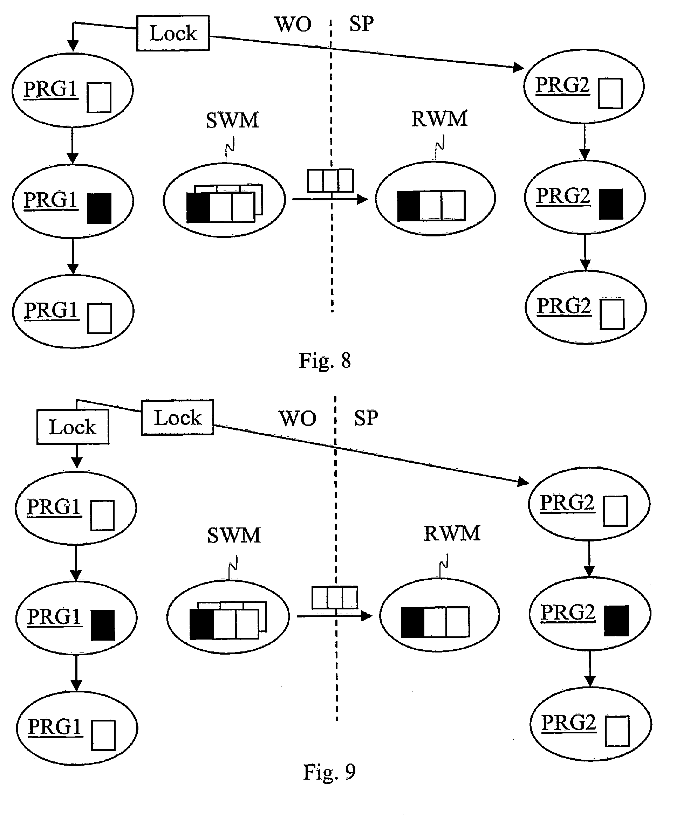

In Figure 7, the working unit WO is locked again, and another snapshot is taken from the dynamic data. During the transfer of the first snapshot, the dynamic data in the working unit WO has been changed by new configuration requests. To cope with this, the warming procedure enters in a loop in which the working unit WO is locked, and a snapshot is taken. The latest snapshot is then compared to the previous snapshot, and only the changes (differences) between the two snapshots are transferred to the receiving warming manager RWM that updates them to its internal memory, as illustrated in Figure 8. During every pass of the loop, less differences are needed to be transferred which in turn means that the transfer takes a shorter time which in turn means that on the average, less changes have happened. Again, in another embodiment of Figure 7, the working unit WO is not locked but the arriving configuration requests are buffered.

In one embodiment of the present invention, the comparison and transferring of the differences in the dynamic data are done as follows. When dynamic data is read from the working unit WO PRG1s in the subsequent turns after the first one, the old snapshot is replaced with the new one, and at the same time, data vectors are subtracted from each other. With this procedure, a vector results where a zero presents an unchanged data, and anything else other than zero changed data. This vector is then transferred to the spare unit SP using e.g. run length encoding which squeezes zeroes (or any runs) in the data. In the spare unit SP side, difference vector is just added to the local copy of the dynamic data. In this scheme, run length encoding implicitly acts as a protocol for marking and sending the differences.

In another embodiment of the present invention, warmable data is handled as blocks of equal size. Consecutive snapshots are compared block by block. The numbers of changed blocks are collected to a table and only changed blocks are sent. With the blocks, also some additional information is sent which identifies the blocks for the receiving warming manager RWM. After that, on the sending warming manager SWM side, the current 'new buffer' becomes the 'previous buffer' for the next round and the current 'previous buffer' becomes the 'new buffer'. Therefore, data copying between the buffers is not needed.

The idea of transferring only differences in the dynamic data makes it also possible to save time during the first transfer if the data areas contain lots of zeroes marking unused entries etc. Before reading anything from working unit WO, data images filled with zeroes are constructed to both buffer memories of the warming managers. There are at least two advantages when initialising the buffers with zeros. The first round can be handled identically compared to the following ones. The initialisation means also that only differences are transferred during the first round.

An interface between the warming manager and clients can be implemented with which the warming manager can ask the 'initial state' of the warmable data (the state that the data is after starting the programs). With this functionality the warming managers can independently produce a result of the initial state of the warmable data which is likely to correspond to the contents of the dynamic data in the working unit WO side better than just zeroes, especially if there has been only few configuration requests.

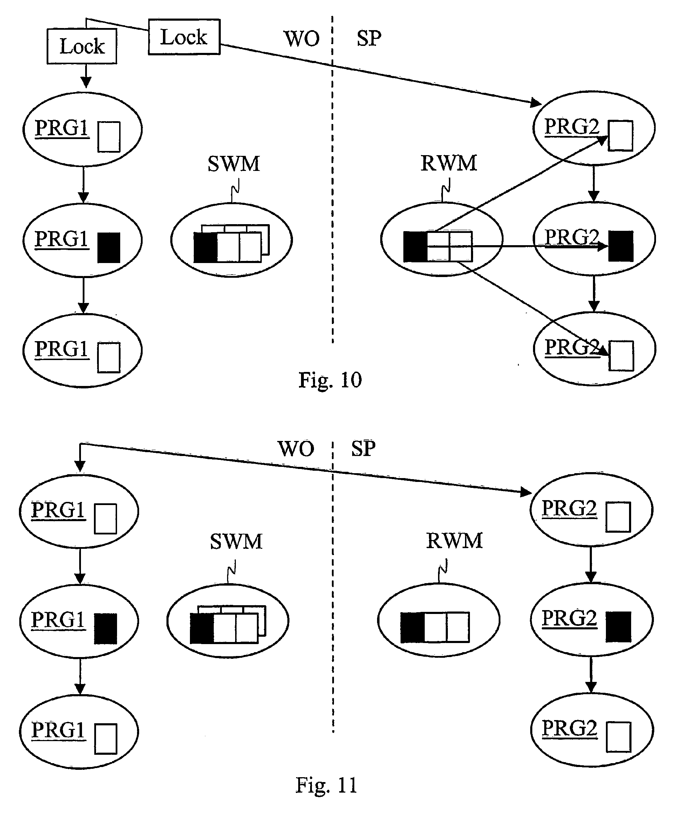

Figure 9 illustrates the transfer of the final snapshot to the spare unit SP side. Taking snapshots, calculating the differences between consecutive snapshots and sending them are repeated until one of the following conditions are met:
- The amount of differences has diminished under a predefined threshold value. Therefore, the WO lock can be kept on also during the transfer and final writing data to warmed objects PRG1 in the spare unit SP side, as illustrated in Figure 10. Only then it is possible to achieve a consistency between the working unit WO and spare unit SP sides. In theory, this condition should be reached quite quickly because the amount of differences should diminish exponentially. Again, in another embodiment of Figure 9, the working unit WO is not locked but the arriving configuration requests are buffered. However, during the final (last) round, also spare unit SP configuration requests need to be buffered. They do not need to be buffered during the previous rounds and if rejecting is used on the working unit, they never need to be buffered.
- If, for some reason, the amount of differences has not diminished enough during the last couple of transfers, last transfer is carried out anyway to conclude the warming procedure.

Figure 11 represents the situation when the warming procedure is finished, and both the working unit WO side and the spare unit SP side comprise identical information. The locks are released synchronously so that the first configuration message coming to the spare unit SP corresponds to the first request coming to the working unit WO.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for warming dynamic data in a redundant functional unit comprising at least a working unit and a spare unit, wherein configuration data is delivered to both said working unit and said spare unit, and wherein said working unit comprises one or more warmable objects, and wherein the dynamic data of said one or more warmable objects of said working unit is copied to one or more warmed objects of said spare unit, wherein the method comprises the step of:
locking said spare unit,
taking one or snapshots of the dynamic data of said one or more warmable objects of said working unit into a first buffer memory of said working unit;
determining the differences between consecutive snapshots after each snapshot;
transferring said differences to a second buffer memory of said spare unit after each snapshot; and when the final snapshot has been taken and the differences between said final snapshot and the previous snapshot has been transferred to said second buffer memory,
writing the contents of said second memory buffer to said one or more warmed objects of said spare unit; and
releasing said spare unit lock.

2. The method according to claim 1, **characterised in that** the method comprises the steps of:
locking also said working unit before taking a snapshot; and
releasing said working unit lock when said snapshot has been taken.

3. The method according to claim 1, **characterised in that** the method comprises the steps of:
buffering requests that arrive while a snapshot of the dynamic data of said one or more warmable objects of said working unit is taken; and
handling said requests only after said snapshot has been taken.

4. The method according to claim 1, **characterised in that** the method comprises the steps of:
determining a threshold value representing the minimum amount of differences between two consecutive snapshots; and when said threshold value is not reached
taking a final snapshot of the dynamic data of said one or more warmable objects of said working unit.

5. The method according to claim 4, **characterised in that** the method comprises the step of:
taking said final snapshot of the dynamic data of said one or more warmable objects of said working unit in spite of that said threshold value is reached.

6. The method according to claim 1, 3, 4 or 5, **characterised in that** when said final snapshot has been taken, the method comprises the step of:
said buffered requests are handled only after the contents of said second memory buffer has been written to said spare unit.

7. The method according to claim 1, 3 or 4, **characterised in that** the method comprises the steps of:
locking also said working unit before taking said final a snapshot; and
releasing said working unit lock only after when said final snapshot has been taken and the contents of said second memory buffer has been written in said one or more warmed objects of said spare unit.

8. A sending warming manager for warming dynamic data in a functional unit of a network element (NE), said functional unit comprising at least a working unit and a spare unit,
wherein the sending warming manager further comprises:
a first interface (IF1) to one or more warmable objects (PRG1) for acquiring dynamic data of said one or more warmable objects (PRG1) of said working unit (WO);
means for taking (SM) one or more snapshots of the dynamic data of said one or more warmable objects (PRG1) of said working unit (WO) using said first interface (IF1);
first memory means (MEM1) for storing said snapshot data;
calculating means (CM) for determining the differences in the data of two consecutive snapshots;
a second interface (IF2) for sending said differences in the data of two consecutive snapshots to a receiving warming manager (RWM) of a spare unit (SP); and
a third interface (IF3) to a recovery subsystem (RSS) of the network element (NE) for receiving a warming procedure request.

9. A receiving warming manager for receiving dynamic data of warmable objects in a functional unit of a network element (NE), said functional unit comprising at least a working unit and a spare unit, wherein the receiving warming manager further comprises:
a fourth interface (IF4) to a sending warming manager (SWM) of a working unit (WO) for receiving differences in the data of two consecutive snapshots taken of the dynamic data of one or more warmable objects of said working unit;
second memory means (MEM2) for storing said difference data;
a fifth interface (IF5) to one or more warmed objects (PRG2) of a spare unit (SP); and
writing means (RM) for storing said difference data in said second memory means (MEM2) in one or more warmed objects (PRG2) of said spare unit (SP).

10. A system for warming dynamic data in a redundant functional unit, the system comprising at least one network element (NE) comprising at least one functional unit (FU) comprising at least a working unit (WO) and a spare unit (SP), wherein configuration data is delivered to both said working unit (WO) and said spare unit (SP), and wherein said working unit (WO) comprises one or more warmable objects (PRG1), and wherein the dynamic data of said one or more warmable objects (PRG1) of said working unit (WO) is copied to one or more warmed objects (PRG2) of said spare unit (SP), wherein the system comprises:
locking means (LM) for locking and unlocking said spare unit (SP),
a sending warming manager (SWM) according to claim 8, and a receiving warming manager (RWM), according to claim 9.

11. The system according to claim 10, **characterised in that** the system comprises:
locking means (LM) for locking and unlocking said working unit (WO).

12. The system according to claim 10, **characterised in that** the system comprises:
a buffer (BUF) for buffering requests that arrive while a snapshot of the dynamic data of said one or more warmable objects (PRG1) of said working unit (WO) is taken.

13. The system according to claim 10, **characterised in that** the system comprises:
a threshold value (TH) representing the minimum amount of differences between two consecutive snapshots, wherein a final snapshot of the dynamic data of said one or more warmable objects (PRG1) of said working unit (WO) is taken when said threshold value (TH) is not reached.

## Patentansprüche

1. Verfahren zum Aufwärmen dynamischer Daten in einer redundanten funktionalen Einheit, die wenigstens eine Arbeitseinheit und eine Reserveeinheit umfasst, wobei Konfigurationsdaten sowohl an die Arbeitseinheit wie auch an die Reserveeinheit gesendet werden, und wobei die Arbeitseinheit ein oder mehrere aufwärmbare Objekte umfasst, und wobei die dynamischen Daten des einen oder der mehreren aufwärmbaren Objekte der Arbeitseinheit zu einem oder mehreren aufgewärmten Objekten der Reserveeinheit kopiert werden, wobei das Verfahren folgende Schritte umfasst:
Sperren der Reserveeinheit;
Ablegen von Momentaufnahmen der dynamischen Daten der einen oder mehreren aufwärmbaren Objekte der Arbeitseinheit in einem ersten Pufferspeicher der Arbeitseinheit;
Bestimmen der Unterschiede zwischen aufeinander folgenden Momentaufnahmen nach jeder Momentaufnahme;
Übertragen der Unterschiede in einen zweiten Pufferspeicher der Reserveeinheit nach jeder Momentaufnahme; und wenn die letzte Momentaufnahme angefertigt wurde und die Unterschiede zwischen dieser letzten Momentaufnahme und der vorhergehenden Momentaufnahme an den zweiten Pufferspeicher übertragen wurden,
Schreiben des Inhalts des zweiten Speicherpuffers zu dem einen oder den mehreren aufgewärmten Objekten der Reserveeinheit; und
Freigeben der Sperre der Reserveeinheit.

2. Verfahren nach Anspruch 1, **dadurch gekennzeichnet, dass** das Verfahren folgende Schritte umfasst:
vor dem Ausführen einer Momentaufnahme auch das Sperren der Arbeitseinheit; und
Freigeben der Sperre der Arbeitseinheit, wenn die Momentaufnahme angefertigt ist.

3. Verfahren nach Anspruch 1, **dadurch gekennzeichnet, dass** das Verfahren folgende Schritte umfasst:
Puffern von Anfragen, die ankommen, während eine Momentaufnahme der dynamischen Daten des einen oder der mehreren aufwärmbaren Objekte der Arbeitseinheit angefertigt wird; und
Bearbeiten dieser Anfragen erst nachdem die Momentaufnahme angefertigt ist.

4. Verfahren nach Anspruch 1, **dadurch gekennzeichnet, dass** das Verfahren folgende Schritte umfasst:
Bestimmen eines Schwellwerts, der die minimale Menge an Unterschieden zwischen zwei aufeinander folgenden Momentaufnahmen repräsentiert; und, wenn dieser Schwellwert nicht erreicht wird,
Ausführen einer letzten Momentaufnahme der dynamischen Daten des einen oder der mehreren aufwärmbaren Objekte der Arbeitseinheit.

5. Verfahren nach Anspruch 4, **dadurch gekennzeichnet, dass** das Verfahren folgenden Schritt umfasst:
Anfertigen der letzten Momentaufnahme der dynamischen Daten des einen oder der mehreren aufwärmbaren Objekte der Arbeitseinheit obwohl der Schwellwert erreicht wurde.

6. Verfahren nach Anspruch 1, 3, 4 oder 5, **dadurch gekennzeichnet, dass** wenn die letzte Momentaufnahme angefertigt wurde, das Verfahren den folgenden Schritt umfasst:
die gepufferten Anfragen werden erst dann bearbeitet, wenn der Inhalt des zweiten Speicherpuffers zur Reserveeinheit geschrieben wurde.

7. Verfahren nach Anspruch 1, 3 oder 4, **dadurch gekennzeichnet, dass** das Verfahren folgende Schritte umfasst:
Sperren auch der Arbeitseinheit bevor die letzte Momentaufnahme angefertigt wird; und
Freigeben der Sperre der Arbeitseinheit erst nachdem die letzte Momentaufnahme angefertigt wurde und der Inhalt des zweiten Speicherpuffers zu dem einen oder den mehreren aufgewärmten Objekten der Reserveeinheit geschrieben wurde.

8. Sende-Aufwärm-Manager zum Aufwärmen dynamischer Daten in einer funktionalen Einheit eines Netzwerkelements (NE), wobei diese funktionale Einheit wenigstens eine Arbeitseinheit und eine Reserveeinheit umfasst,
wobei der Sende-Aufwärm-Manager außerdem folgendes umfasst:
eine erste Schnittstelle (IF1) zu einem oder mehreren aufwärmbaren Objekten (PRG1) zum Erfassen dynamischer Daten des einen oder der mehreren aufwärmbaren Objekte (PRG1) der Arbeitseinheit (WO);
Mittel zum Ausführen (SM) einer oder mehrerer Momentaufnahmen der dynamischen Daten des einen oder der mehreren aufwärmbaren Objekte (PRG1) der Arbeitseinheit (WO) unter Verwendung der ersten Schnittstelle (IF1);
erste Speichermittel (MEM1) zum Speichern der Momentaufnahmedaten;
Berechnungsmittel (CM) zum Bestimmen der Unterschiede in den Daten zweier aufeinander folgender Momentaufnahmen;
eine zweite Schnittstelle (IF2) zum Senden der Unterschiede in den Daten der zwei aufeinander folgenden Momentaufnahmen an einen Empfangs-Aufwärm-Manager (RWM) einer Reserveeinheit (SP); und
eine dritte Schnittstelle (IF3) zu einem Wiederherstellungs-Subsystem (RSS) des Netzwerkelements (NE) zum Empfangen einer Aufwärmvorgangsanfrage.

9. Empfangs-Aufwärm-Manager zum Empfangen dynamischer Daten von aufwärmbaren Objekten in einer funktionalen Einheit eines Netzwerkelements (NE), wobei diese funktionale Einheit wenigstens eine Arbeitseinheit und eine Reserveeinheit umfasst,
wobei der Empfangs-Aufwärm-Manager außerdem folgendes umfasst:
eine vierte Schnittstelle (IF4) zu einem Sende-Aufwärm-Manager (SWM) einer Arbeitseinheit (WO) zum Empfangen von Unterschieden in den Daten zweier aufeinander folgender Momentaufnahmen, die von den dynamischen Daten eines oder mehrerer aufwärmbarer Objekte der Arbeitseinheit angefertigt wurden;
zweite Speichermittel (MEM2) zum Speichern der Unterschiedsdaten;
eine fünfte Schnittstelle (IF5) zu einem oder mehreren aufgewärmten Objekten (PRG2) einer Reserveeinheit (SP); und
Schreibmittel (RM) zum Speichern der Unterschiedsdaten in den zweiten Speichermitteln (MEM2) in einem oder mehreren aufgewärmten Objekten (PRG2) der Reserveeinheit (SP).

10. System zum Aufwärmen dynamischer Daten in einer redundanten funktionalen Einheit, wobei das System wenigstens ein Netzwerkelement (NE) umfasst, das wenigstens eine funktionale Einheit (FU) umfasst, die wenigstens eine Arbeitseinheit (WO) und eine Reserveeinheit (SP) umfasst, wobei Konfigurationsdaten sowohl an die Arbeitseinheit (WO) wie auch an die Reserveeinheit (SP) gesendet werden, und wobei die Arbeitseinheit (WO) ein oder mehrere aufwärmbare Objekte (PRG1) umfasst, und wobei die dynamischen Daten des einen oder der mehreren aufwärmbaren Objekte (PRG1) der Arbeitseinheit (WO) zu einem oder mehreren aufgewärmten Objekten (PRG2) der Reserveeinheit (SP) kopiert werden, wobei das System folgendes umfasst:
Sperrmittel (LM) zum Sperren und Freigeben der Reserveeinheit (SP),
einen Sende-Aufwärm-Manager (SWM) nach Anspruch 8 und einen Empfangs-Aufwärm-Manager (RWM) nach Anspruch 9.

11. System nach Anspruch 10, **dadurch gekennzeichnet, dass** das System folgendes umfasst:
Sperrmittel (LM) zum Sperren und Freigeben der Arbeitseinheit (WO).

12. System nach Anspruch 10, **dadurch gekennzeichnet, dass** das System folgendes umfasst:
einen Puffer (BUF) zum Puffern von Anfragen, die ankommen, während eine Momentaufnahme der dynamischen Daten des einen oder der mehreren aufwärmbaren Objekte (PRG1) der Arbeitseinheit (WO) angefertigt wird.

13. System nach Anspruch 10, **dadurch gekennzeichnet, dass** das System folgendes umfasst:
einen Schwellwert (TH), der die minimale Menge an Unterschieden zwischen zwei aufeinander folgenden Momentaufnahmen repräsentiert, wobei eine letzte Momentaufnahme der dynamischen Daten des einen oder der mehreren aufwärmbaren Objekte (PRG1) der Arbeitseinheit (WO) angefertigt wird, wenn der Schwellwert (TH) nicht erreicht wird.

## Revendications

1. Procédé pour activer des données dynamiques dans une unité fonctionnelle redondante comportant au moins une unité en service et une unité de réserve, dans lequel des données de configuration sont délivrées à la fois à ladite unité en service et à ladite unité de réserve et dans lequel ladite unité en service comporte un ou plusieurs objets activables, et dans lequel les données dynamiques dudit un ou desdits plusieurs objets activables de ladite unité en service sont copiées vers un ou plusieurs objets activés de ladite unité de réserve, dans lequel le procédé comporte les étapes consistant à :
verrouiller ladite unité de réserve,
prendre des instantanés des données dynamiques dudit un ou desdits plusieurs objets activables de ladite unité en service dans une première mémoire tampon de ladite unité en service ;
déterminer les différences entres des instantanés consécutifs après chaque instantané ;
transférer lesdites différences à une seconde mémoire tampon de ladite unité de réserve après chaque instantané; et lorsque le dernier instantané a été pris et que la différence entre ledit dernier instantané et l'instantané précédent a été transférée à ladite seconde mémoire tampon écrire le contenu de ladite seconde mémoire tampon dans ledit un ou lesdits plusieurs objets activés de ladite unité de réserve; et
libérer ledit verrouillage d'unité de réserve.

2. Procédé selon la revendication 1, **caractérisé en ce que** le procédé comporte les étapes consistant à :
verrouiller également ladite unité en service avant de prendre un instantané ; et
libérer ledit verrouillage d'unité en service lorsque ledit instantané a été pris.

3. Procédé selon la revendication 1, **caractérisé en ce que** le procédé comporte les étapes consistant à :
mettre en mémoire tampon des demandes qui arrivent lorsqu'un instantané des données dynamiques dudit un ou desdits plusieurs objets activables de ladite unité en service est pris ; et
transmettre lesdites demandes uniquement après que ledit instantané a été pris.

4. Procédé selon la revendication 1, **caractérisé en ce que** le procédé comporte les étapes consistant à :
déterminer une valeur seuil représentant la quantité minimale de différences entre deux instantanés consécutifs ; et lorsque ladite valeur seuil n'est pas atteinte,
prendre un dernier instantané des données dynamiques dudit un ou desdits plusieurs objets activables de ladite unité en service.

5. Procédé selon la revendication 4, **caractérisé en ce que** le procédé comporte les étapes consistant à :
prendre ledit dernier instantané des données dynamiques dudit un ou desdits plusieurs objets activables de ladite unité en service en dépit du fait que ladite valeur seuil est atteinte.

6. Procédé selon la revendication 1, 3, 4 ou 5, **caractérisé en ce que**, lorsque ledit dernier instantané a été pris, le procédé comporte les étapes dans lesquelles :
lesdites demandes mises en mémoire tampon sont traitées uniquement après que le contenu de ladite seconde mémoire tampon a été écrit dans ladite unité de réserve.

7. Procédé selon la revendication 1, 3 ou 4, **caractérisé en ce que** le procédé comporte les étapes consistant à :
verrouiller également ladite unité en service avant de prendre ledit dernier instantané ; et
libérer ledit verrouillage d'unité en service uniquement après que ledit dernier instantané a été pris et que le contenu de ladite seconde mémoire tampon a été écrit dans ledit un ou lesdits plusieurs objets activés de ladite unité de réserve.

8. Gestionnaire d'activation émetteur pour activer des données dynamiques dans une unité fonctionnelle d'un élément de réseau (NE), ladite unité fonctionnelle comportant au moins une unité en service et une unité de réserve,
dans lequel le gestionnaire d'activation émetteur comporte en outre :
une première interface (IF1) à un ou plusieurs objets activables (PRG1) pour acquérir des données dynamiques dudit un ou desdits plusieurs objets activables (PRG1) de ladite unité en service (WO) ;
un moyen pour prendre (SM) un ou plusieurs instantanés des données dynamiques dudit un ou desdits plusieurs objets activables (PRG1) de ladite unité en service (WO) en utilisant ladite première interface (IF1) ;
un premier moyen de mémoire (MEM1) pour stocker lesdites données d'instantanés;
un moyen de calcul (CM) pour déterminer les différences dans les données de deux instantanés consécutifs ;
une deuxième interface (IF2) pour transmettre lesdites différences dans les données de deux instantanés consécutifs à un gestionnaire d'activation récepteur (RWM) d'une unité de réserve (SP) ;
une troisième interface (IF3) à un sous-système de reprise (RSS) de l'élément de réseau (NE) pour recevoir une demande de procédure d'activation.

9. Gestionnaire d'activation récepteur pour recevoir des données dynamiques d'objets activables dans une unité fonctionnelle d'un élément de réseau (NE), ladite unité fonctionnelle comportant au moins une unité en service et une unité de réserve, dans lequel le gestionnaire d'activation récepteur comporte en outre :
une quatrième interface (IF4) au niveau d'un gestionnaire d'activation émetteur (SWM) d'une unité en service (WO) pour recevoir des différences dans les données des deux instantanés consécutifs pris à partir des données dynamiques d'un ou plusieurs objets activables de ladite unité en service ;
un second moyen de mémoire (MEM2) pour stocker lesdites données de différence;
une cinquième interface (IF5) au niveau d'un ou plusieurs objets activés (PRG2) d'une unité de réserve (SP) ; et
un moyen d'écriture (RM) pour stocker lesdites données de différence dans ledit second moyen de mémoire (MEM2) dans un ou plusieurs objets activés (PRG2) de ladite unité de réserve (SP).

10. Système pour activer des données dynamiques dans une unité fonctionnelle redondante, le système comportant au moins un élément de réseau (NE) comportant au moins une unité fonctionnelle (FU) comportant au moins une unité en service (WO) et une unité de réserve (SP), dans lequel des données de configuration sont délivrées à la fois à ladite unité en service (WO) et à ladite unité de réserve (SP), et dans lequel ladite unité en service (WO) comporte un ou plusieurs objets activables (PRG1), et dans lequel les données dynamiques dudit un ou desdits plusieurs objets activables (PRG1) de ladite unité en service (WO) sont copiées vers un ou plusieurs objets activés (PRG2) de ladite unité de réserve (SP), dans lequel le système comporte :
un moyen de verrouillage (LM) pour verrouiller et déverrouiller ladite unité de réserve (SP),
un gestionnaire d'activation émetteur (SWM) selon la revendication 8 et un gestionnaire d'activation récepteur (RWM) selon la revendication 9.

11. Système selon la revendication 10, **caractérisé en ce que** le système comporte :
un moyen de verrouillage (LM) pour verrouiller et déverrouiller ladite unité en service (WO).

12. Système selon la revendication 10, **caractérisé en ce que** le système comporte :
une mémoire tampon (BUF) pour mettre en mémoire tampon des demandes qui arrivent lorsqu'un instantané des données dynamiques dudit un ou desdits plusieurs objets activables (PRG1) de ladite unité en service (WO) est pris.

13. Système selon la revendication 10, **caractérisé en ce que** le système comporte :
une valeur seuil (TH) représentant la quantité minimale de différences entre deux instantanés consécutifs, dans laquelle un dernier instantané des données dynamiques dudit un ou desdits plusieurs objets activables (PRG1) de ladite unité en service (WO) est pris lorsque ladite valeur seuil (TH) n'est pas atteinte.
